# EUROPÄISCHE PATENTSCHRIFT

(11) **EP 3 184 228 B1**
(45) Veröffentlichungstag und Bekanntmachung des Hinweises auf die Patenterteilung: **10.07.2019**
(21) Anmeldenummer: 15201938.6
(22) Anmeldetag: 22.12.2015
(51) Int. Cl.: B23K 9/235, B23K 10/02, B23K 26/60, B23K 35/365, C09D 5/08

(54) **VERWENDUNG VON SAUERSTOFFBARRIEREBESCHICHTUNGEN AUF METALLISCHEN SUBSTRATEN**
USE OF OXYGEN BARRIER COATINGS ON METALLIC SUBSTRATES
UTILISATION DE REVETEMENTS FAISANT BARRIERE A OXYGENE SUR DES SUBSTRATS METALLIQUES

(43) Veröffentlichungstag der Anmeldung: 28.06.2017
(73) Patentinhaber: EWALD DÖRKEN AG, 58313 Herdecke (DE)
(72) Erfinder: Roth, Marcel, 40589 Düsseldorf (DE); Reusmann, Gerhard, 45259 Essen (DE); Owczarek, Kai, 58313 Herdecke (DE)
(74) Vertreter: Von Rohr Patentanwälte Partnerschaft mbB

(56) Entgegenhaltungen:
- EP-A2- 0 246 566
- WO-A1-2013/056848
- WO-A2-2007/076766
- DE-A1- 4 124 976
- US-A- 5 593 492

## Beschreibung

Die vorliegende Erfindung betrifft das technische Gebiet der Trenn- und Fügeverfahren für metallische Substrate, insbesondere Schweißverfahren.

Insbesondere betrifft die vorliegende Erfindung die Verwendung einer Sauerstoffbarrierebeschichtung als Schutzbeschichtung in Füge- und Trennverfahren, insbesondere Schweißverfahren, für metallische Substrate.

Darüber hinaus betrifft die vorliegende Erfindung ein Verfahren zum Fügen und/oder Trennen von metallischen Substraten sowie die mit dem erfindungsgemäßen Verfahren erhältlichen Produkte bzw. Zwischenprodukte.

Trotz der zunehmenden Bedeutung von Klebstoff und Klebstoffanwendungen bleibt das Schweißen, bei welchem Substrate bzw. Bauteile unter Einwirkung von Energie, insbesondere von Wärme und/oder Druck, verbunden werden, das am weitesten verbreitete Fügeverfahren zur dauerhaften und unlösbaren Verbindung von metallischen Substraten bzw. Bauteilen. Dies gilt insbesondere auch für Reparaturmaßnahmen an Metallbauteilen, bei welchen Teile des metallischen Bauteils ersetzt werden müssen.

Beim Schmelzschweißen werden die metallischen Substrate lokal an den Stellen, an welchen sie miteinander vereinigt werden, derart erhitzt, dass die Grundwerkstoffe in den flüssigen Aggregatzustand übergehen. Hierbei kommt es vor, dass flüssiges Metall aus der Schweißfuge oder dem Elektrodenmaterial auf die umgebende Metalloberfläche spritzt und dort anhaftet. Diese Metallspritzer, auch Schweißperlen genannt, verschlechtern zum einen den optischen Eindruck der geschweißten Metallteile und erschweren zum anderen die nachfolgende gleichmäßige Beschichtung der Metallsubstrate, beispielsweise mit Korrosionsschutzbeschichtungen oder Lacken.

Eine besondere Problematik der Metallspritzer bzw. Schweißperlen liegt darin begründet, dass die Metallspritzer nicht alle gleich stark an der Metalloberfläche haften, sondern in dieser Hinsicht eine sehr große Varianz aufweisen. Hierdurch kann es vorkommen, dass beispielsweise in nachfolgenden Bearbeitungsschritten oder bei Gebrauch der Metallteile ein Teil der anhaftenden Metallspritzer unbeabsichtigt entfernt wird, wodurch eine aufgebrachte Beschichtung zerstört wird. Aus diesem Grund müssen Metallspritzer üblicherweise sehr aufwendig entfernt werden. Darüber hinaus wird eine mit Schweißperlen übersäte Metalloberfläche üblicherweise weder von gewerblichen Kunden oder Verbrauchern akzeptiert.

Ein weiteres im Zusammenhang mit Schmelzschweißverfahren auftretendes Problem ist, dass die Oberfläche der Metallsubstrate durch die Hitzeeinwirkung in Gegenwart von Luftsauerstoff um die Schweißnaht herum verzundert, d. h. dass oxidische Oberflächen gebildet werden. Diese oxidischen Oberflächen erschweren oder verhindern gleichfalls die nachfolgende Bearbeitung der Metallsubstrate, beispielsweise in Beschichtungsverfahren, wie z. B. dem Auftrag von Korrosionsschutzbeschichtungen. Die Folge sind ungleichmäßige Beschichtungen, welche stellenweise schlecht oder gar nicht auf dem Substrat haften. Durch die mangelhafte Haftung der Beschichtungen, insbesondere von dekorativen Lacken, kann es zu Abplatzungen der Beschichtungen und in der Folge zu Reklamationen bzw. einer rascheren Korrosion der Bauteile kommen. Aus diesem Grund muss Zunder an der Oberfläche der Metallsubstrate möglichst gründlich und sorgfältig entfernt werden.

Die Verzunderung der Metalloberfläche birgt darüber hinaus die Gefahr, dass sich die Verzunderung bis in den Bereich der Schweißnaht erstreckt und die Qualität und Dauerhaftigkeit der Schweißverbindung schwächt.

Schließlich kommt es bei Schmelzschweißverfahren üblicherweise zur Bildung von Mikroschlacken, welche sich auf der Substratoberfläche niederschlagen, den sogenannten Schmauchspuren. Diese stören zum einen das ästhetische Gesamtbild der gefügten Substratoberfläche und müssen darüber hinaus mechanisch und/oder chemisch aufwendig entfernt werden, ehe eine weitere Behandlung, insbesondere Beschichtung, der verschweißten Metallsubstrate bzw. -bauteile erfolgen kann.

Aufgrund der hohen wirtschaftlichen Bedeutung des Schmelzschweißens hat es daher beim Stand der Technik nicht an Versuchen gefehlt, zumindest die Anhaftung von Metallspritzern an der Oberfläche geschweißter Metallteile zu minimieren bzw. zu verhindern. So wurden beispielsweise spezielle Schutzfolien entwickelt, welche temporär in Nachbarschaft des Schweißstoßes auf die Metallbauteile bzw. Metallsubstrate aufgebracht werden. Die Folien sollen die Anhaftung von Metallspritzern verhindern und werden nach Durchführung des Schweißverhaltens anschließend wieder entfernt. Das Aufbringen bzw. Entfernen der Schutzfolien ist jedoch aufwendig und kostenintensiv. Darüber hinaus schützten die Folien auch vor Schmauchspuren, jedoch kann eine Verzunderung der Metalloberfläche in der Nähe der Schweißnaht nicht wirkungsvoll verhindert werden.

Darüber hinaus ist es auch möglich, Schutzbeschichtungen auf die Metalloberfläche aufzubringen, welche ein Anhaften der Metallspritzer verhindern sollen. Beispielsweise werden Fettsäureester auf die Metalloberfläche aufgebracht, um eine Anhaftung von Mikroschlacken und Metallspritzern zu verhindern.

Weiterhin werden auch keramisch basierte Materialien, beispielsweise in Form von Sprays, auf die Metalloberfläche aufgebracht, um das Anhaften von Metallspritzern und Schmauch zu verhindern.

So offenbart die WO 2015/027003 A1 eine Beschichtungszusammensetzung zur Herstellung einer Antispritzbeschichtung für Schweißvorgänge, welche eine keramische Vorläufersubstanz, einen Vernetzer und optional ein vernetzbares Harz aufweist.

Die vorgenannten Beschichtungen können zwar zu einem gewissen Grad das Anhaften von Metallspritzern sowie Schmauchspuren verhindern, jedoch kann einer Verzunderung der Metalloberfläche nicht effektiv entgegengewirkt werden.

Aus dem Bereich der warmumgeformten hochfesten Stähle (synonym auch als *press-harding-steel* oder *phs* bezeichnet), welche ihre besondere Festigkeit durch einen Umformprozess bei ca. 950 °C erhalten, sind Zunderschutzbeschichtungen bekannt, welche einer Oxidation der Metalloberfläche bei 950 °C effektiv entgegenwirken:
So betrifft die WO 2007/076766 A2 ein Beschichtungsmittel zum Schutz von Metallen, insbesondere Stahl, vor Verzunderung, wobei das Beschichtungsmittel einerseits Stahl wirkungsvoll vor Verzunderung schützen und andererseits nach Wärmebehandlung des Stahls bei Temperaturen oberhalb von 800 °C noch punktschweißbar sein soll. Als Beschichtungsmittel werden unter anderem Silane und Siloxane enthaltende Bindemittel verwendet, welche Aluminiumpartikel aufweisen. Ziel ist es, eine Verzunderung der Metalloberfläche zu verhindern und gleichzeitig die elektrische Leitfähigkeit des beschichteten Substrats zu erhalten, so dass ein Punktschweißen des Materials ermöglicht wird.

Auch die WO 2014/095643 A1 betrifft ein Verfahren zur Aufbringung einer schweißbaren Verzunderungsschutzschicht auf Stahl, wobei zunächst eine pigmenfreie silikatische Dünnschicht auf der Stahloberfläche erzeugt und anschließend ein Nassfilm eines aushärtbaren pigmenthaltigen Lackes aufgebracht wird. Der pigmenthaltige Lack enthält neben Alumiumpigmenten auch Bismutpigmente sowie mindestens ein silan- und/oder siloxanbasiertes Bindemittel. Auch hier soll einerseits einer Verzunderung der Metalloberfläche bei Warmumformprozessen entgegengewirkt werden und andererseits die Punktschweißbarkeit des beschichteten Metallsubstrats gewährleistet bleiben.

Die WO 2013/056848 A1 betrifft ein Verfahren zur Herstellung von beschichteten Stahlsubstraten zur Warmumformung oder für andere Hochtemperaturanwendungen, wobei die Beschichtungszusammensetzung ein aushärtbares organisches Bindemittel und Metallpartikel enthält. Es soll wiederum einerseits ein Schutz vor Verzunderung während der Warmumformprozesse gewährleistet und andererseits die elektrische Schweißbarkeit der beschichteten Materialien gegeben sein.

Die Verwendung von Schutzbeschichtungen, insbesondere Zunderschichtbeschichtungen, für Schweißprozesse ohne vorangehende Wärmebehandlung und Warmumformung der Metalle ist in den vorgenannten Dokumenten nicht vorgesehen. Es soll vielmehr allein ein Schutz vor Verzunderung der Metalloberfläche während des Warmumformprozesses gewährleistet werden.

Darüber hinaus sollen die Schutzbeschichtung elektrische Leitfähigkeiten aufweisen, welche ein Punktschweißen der umgeformten Metallteile erlauben. Widerstandsschweißverfahren wie das Punktschweißverfahren sind jedoch mit anderen Schweißverfahren, insbesondere Schmelzschweißverfahren, wie beispielsweise Lichtbogenschweißen, nur bedingt vergleichbar. So erfolgt das Punktschweißen üblicherweise bei deutlich geringeren Temperaturen und scharfer lokaler Begrenzung, nämlich punktförmig, während beim Lichtbogenschweißen Temperaturen von 2.000 °C bis 3.000 °C auftreten können und die Schweißnaht sich in der Regel über größere Bereiche erstreckt. Metallspritzer sowie das Auftreten von Mikroschlacken, d. h. Schmauchspuren, spielen beim Punktschweißen daher eine unbedeutende Rolle und werden bei fachgerechter Ausführung des Schweißvorgangs üblicherweise nicht beobachtet. Auch eine Verzunderung der Metalloberfläche in der Nähe der Schweißnaht wird folglich nicht beobachtet.

Darüber hinaus werden Stahlsubstrate oftmals mit Metallpigmente enthaltenden Beschichtungen versehen, um bei Raumtemperatur eine verbesserte Korrosionsbeständigkeit des Stahlsubstrats erzielen und die Punktschweißbarkeit der Substrate zu erhalten. So offenbart beispielsweise die WO 99/24545 A1 leitfähige und elektrisch schweißbare Korrosionsschutzzusammensetzungen auf Basis organischer Polymere und leitfähiger Füllstoffe. Auch in diesem Fall soll allein die Punktschweißbarkeit der beschichteten Stahlsubstrate gewährleistet werden.

Im Ergebnis gibt es somit im Stand der Technik kein Verfahren bzw. keine technische Lösung, mit welchen bzw. mit welcher Metallsubstrate, insbesondere Stahlbauteile, in Schweißverfahren, speziell Lichtbogenschweißverfahren oder Gasschmelzschweißverfahren, effektiv vor Metallspritzern, Schmauchspuren und Verzunderung geschützt werden können.

Der vorliegenden Erfindung liegt somit die Aufgabe zugrunde, eine Schutzbeschichtung bzw. die Verwendung einer Schutzbeschichtung bereitzustellen, welche die zuvor genannten im Zusammenhang mit im Stand der Technik auftretenden Probleme und Nachteile verhindert, zumindest jedoch abschwächt.

Insbesondere ist eine Aufgabe der vorliegenden Erfindung darin zu sehen, eine Beschichtung bzw. ihre Verwendung bereitzustellen, welche Metallsubstrate, insbesondere Stahlsubstrate und Stahlbauteile bei Schweißvorgängen, insbesondere Lichtbogenschweißen und des Gasschmelzschweißen, effektiv vor Verzunderung, Metallspritzern und Schmauch schützt.

Darüber hinaus ist eine weitere Aufgabe der vorliegenden Erfindung darin zu sehen, eine Beschichtung bzw. die Verwendung einer Beschichtung bereitzustellen, welche die Metalloberfläche nicht nur effektiv während des Schweißvorganges schützt, sondern darüber hinaus auch ohne Weiteres wieder entfernt bzw. beschichtet werden kann und auch nach erfolgtem Schweißvorgang eine optisch ansprechenden Oberfläche aufweist.

Zur Lösung der vorgenannten Aufgabe schlägt die vorliegende Erfindung gemäß einem ersten Aspekt der vorliegenden Erfindung die Verwendung einer Beschichtung nach Anspruch 1 vor; weitere vorteilhafte Ausgestaltungen dieses Erfindungsaspektes sind Gegenstand der diesbezüglichen Unteransprüche.

Darüber hinaus ist weiterer Gegenstand der vorliegenden Erfindung gemäß einem zweiten Aspekt der vorliegenden Erfindung ein Verfahren zum Fügen von metallischen Substraten mittels Schweißen gemäß dem diesbezüglichen unabhängigen Verfahrensanspruch.

Weiterhin ist Gegenstand der vorliegenden Erfindung gemäß einem dritten Aspekt der vorliegenden Erfindung ein Verfahren zum Trennen von Metallsubstraten gemäß dem diesbezüglichen unabhängigen Verfahrensanspruch.

Schließlich ist wiederum weiterer Aspekt der vorliegenden Erfindung, gemäß einem vierten Aspekt der vorliegenden Erfindung, das mit dem erfindungsgemäßen Verfahren erhaltene bzw. unter Verwendung einer Schutzbeschichtung hergestellte Metallsubstrat.

Es versteht sich von selbst, das Besonderheiten, Merkmale, Ausgestaltung und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100% resultieren; dies versteht sich jedoch von selbst.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit die Verwendung einer Sauerstoffbarrierebeschichtung als Schutzbeschichtung für Füge- und/oder Trennverfahren, insbesondere für Schweißverfahren, an metallischen Substraten.

Denn, wie sich überraschend herausgestellt hat, lässt sich durch Verwendung von Sauerstoffbarrierebeschichtungen, insbesondere von Zunderschutzbeschichtungen, nicht nur die Verzunderung der Metalloberfläche im Bereich der Schweißnähte wirkungsvoll verhindern bzw. minimieren, sondern auch das Anhaften von Metallspritzern und Mikroschlacken, sogenannten Schmauchspuren.

Insbesondere lassen sich Metallspritzer, auch Schweißperlen genannt, beispielsweise durch einfaches Behandeln mit Bürsten, welches auch im großtechnischen Maßstab mit wenig Aufwand durchgeführt werden kann, restlos entfernen. Auch eventuell anhaftende Schmauchspuren können mittels Bürsten bzw. durch einfaches Reinigen mit Tüchern oder Vliesen entfernt werden.

Insbesondere ist es durch die erfindungsgemäße Verwendung einer Sauerstoffbarrierebeschichtung möglich, die Verzunderung in Bereichen der Metalloberfläche direkt an oder unter der Schweißnaht zu verhindern.

Die Verwendung einer Sauerstoffbarrierebeschichtung, insbesondere hochgefüllter, Metallpartikel enthaltender keramischer Systeme, ermöglicht darüber hinaus eine optisch ansprechende, insbesondere metallisch glänzende, Oberflächenbeschichtung, welche einen erhöhten Korrosionsschutz gewährleistet, leicht zu reinigen ist und während Schweiß- und Trennvorgängen Schutz vor Verzunderung, Schmauch und Metallspritzern bietet.

Vorzugsweise behält die Sauerstoffbarrierebeschichtung auch nach Durchführung des Füge- oder Trennverfahrens ihre ästhetisch ansprechende Oberfläche.

Darüber hinaus ist die erfindungsgemäß verwendete Sauerstoffbarrierebeschichtung ohne Weiteres beschichtbar, d. h. die geschweißten bzw. getrennten Metallsubstrate können mit Korrosionsbeschichtungen bzw. dekorativen Beschichtungen, wie beispielsweise Lacken, versehen werden, ohne dass infolge einer Verzunderung beispielsweise Unregelmäßigkeiten oder Abplatzungen auftreten.

Bei Bedarf kann die erfindungsgemäß verwendete Sauerstoffbarrierebeschichtung auch einfach wieder entfernt werden, beispielsweise durch Beizen mit Laugen oder Säuren oder durch Behandlung mit organischen Lösemitteln; auch eine Entfernung der Beschichtung mittels Hochdruckreinigern ist möglich. Dies ist z. B. notwendig, wenn das metallische Substrat nach dem Füge- bzw. Trennvorgang einer kathodischen Tauchlackierung (KTL) unterzogen werden soll, da die erfindungsgemäß verwendete Sauerstoffbarrierebeschichtung üblicherweise einen zu hohen elektrischen Widerstand für kathodische Tauchlackierungen aufweist.

Unter einem "Substrat" soll im Rahmen der vorliegenden Erfindung jedes schweißbare Werkstück, insbesondere Metall- bzw. Metallbauteil, verstanden werden. Insbesondere kann ein Substrat auch getrennt werden, indem durch ein Trennverfahren aus einem Substrat zwei oder mehrere Substrate erzeugt werden.

Unter dem Begriff "Schweißen" soll im Rahmen der vorliegenden Erfindung das unlösbare Verbinden von Bauteilen unter Anwendung von Wärme und/oder Druck, mit oder ohne Schweißzusatzwerkstoffen verstanden werden. Diese Definition ist beispielsweise auch in EN 14610 sowie DIN 1910-100 festgelegt.

Im Allgemeinen ist die Sauerstoffbarrierebeschichtung eine Zunderschutzbeschichtung. Zunderschutzbeschichtungen werden üblicherweise bei der Warmumformung von Metallen, insbesondere zur Herstellung von Bauteilen aus warmumgeformten hochfesten Stählen, verwendet, um eine Verzunderung der Metalloberfläche während der Erwärmung und der Warmumformung zu verhindern. Wie sich jedoch herausgestellt hat, lassen sich geeignete Zunderschutzbeschichtungen auch als Schutzbeschichtung bei Füge- bzw. Trennverfahren metallischer Substrate einsetzen, bei welchen das Metall deutlich höheren Temperaturen ausgesetzt wird als bei der Warmumformung. Während die Temperaturen bei der Warmumformung üblicherweise im Bereich von ca. 950 °C liegen, werden bei Schweißverfahren, insbesondere Schmelzschweißverfahren, wie beispielsweise Lichtbogenschweißen oder Gasschmelzschweißen, oder auch beim Trennen von metallischen Substraten mittels Laser- oder Plasmaschneiden Temperaturen von 2.000 °C bis 3.000 °C erreicht. Auch bei diesen Temperaturen können geeignete Sauerstoffbarrierebeschichtungen, insbesondere Zunderschutzbeschichtungen, die Metalloberfläche vor Verzunderung, aber auch vor Anhaftungen schützen. Insbesondere schützen geeignete Sauerstoffbarrierebeschichtungen die Substratoberfläche bei den im Rahmen der Schweißprozesse auftretenden Temperaturgradienten zuverlässig Im Temperaturbereich von Raumtemperatur bis zu 3.000 °C oder mehr vor Verzunderung.

Im Rahmen der vorliegenden Erfindung kann es vorgesehen sein, dass die Sauerstoffbarrierebeschichtung als Schutzbeschichtung beim Schweißen verwendet wird.

Gemäß einer bevorzugten Ausführungsform der vorliegenden Erfindung ist das Schweißverfahren ein Schmelzschweißverfahren.

In diesem Zusammenhang kann es vorgesehen sein, dass das Schweißverfahren ausgewählt ist aus der Gruppe von Gasschmelzschweißen, Lichtbogenschweißen, insbesondere Lichtbogenhandschweißen und/oder Metallschutzgasschweißen, Plasmaschweißen und Laserschweißen.

Besonders gute Ergebnisse werden erhalten, wenn das Schweißverfahren ausgewählt ist aus Lichtbogenhandschweißen und Metallschutzgasschweißen.

Unter "Schmelzschweißen" bzw. einem "Schmelzschweißverfahren" ist im Rahmen der vorliegenden Erfindung Schweißen bei örtlich begrenztem Schmelzfluss ohne Anwendung von Kraft mit oder ohne gleichartigem Schweißzusatz, wobei die Liquidustemperatur der Grundwerkstoffe überschritten wird, zu verstehen. Diese Definition ist beispielsweise auch in ISO 857-1 wiedergegeben.

Im Gegensatz zum Schmelzschweißen handelt es sich beim Punktschweißen um ein Pressschweißverfahren, insbesondere ein Widerstandsschweißverfahren, bei welchem die Substrate durch elektrischen Strom auf Schweißtemperatur gebracht und unter Kraftwirkung fest miteinander verbunden werden.

Unter Metallschutzgasschweißen sind im Rahmen der vorliegenden Erfindung sämtliche unter Schutzgas durchgeführten Schmelzschweißverfahren zu verstehen. Gemäß einer bevorzugten Ausführungsform der vorliegenden Erfindung handelt es sich bei Metallschutzgasschweißen um das Metallschweißen mit inerten Gasen gemäß EN ISO 4063: Prozess 131 oder Metallgasschweißen mit aktiven Reaktionsgasen (MAG) gemäß EN ISO 4063: Prozess 135. Diese Schweißverfahren sind Lichtbogenschweißverfahren mit einem abschmelzenden Schweißdraht, wobei das Metallschweißen mit inerten Gasen üblicherweise in einer Argon- oder Heliumatmosphäre durchgeführt wird, während für das Schweißen mit aktiven Gasen eine Kohlenstoffdioxidatmosphäre oder eine Mischung aus Argon mit geringen Teilen Kohlendioxid und Sauerstoff verwendet wird. Weitere Beispiele für das Metallschutzgasschweißen sind das Wolfram-Inertgasschweißen gemäß EN ISO 4063: Prozess 141.

Den zuvor genannten Schmelzschweißverfahren ist gemein, dass sehr hohe Temperaturen während des Schweißvorganges auftreten, welche zum Teil bei über 3.000 °C liegen, und dass die Schweißverfahren für längere Schweißnähte verwendet werden, so dass die Temperatureinwirkung über einen längeren Zeitraum aufrechterhalten wird. Die Energieeinwirkung führt zu Oxidationsprozessen an der Metalloberfläche sowie zur Schlackenbildung und zum Auftreten von Metallspritzern.

Bei den Trennverfahren handelt es sich im Rahmen der vorliegenden Erfindung üblicherweise um Plasmaschneiden oder Laserschneiden. Sowohl beim Plasma- als auch beim Laserschneiden entstehen Temperaturen, welche denen des Schmelzschweißens entsprechen und gleichfalls über einen längeren Zeitraum auf das Metallsubstrat einwirken. Auch hier ist folglich ein Schutz gegenüber Verzunderung, Metallspritzern und Schmauchspuren erforderlich.

Üblicherweise wird im Rahmen der vorliegenden Erfindung die Schutzbeschichtung zur Verhinderung und/oder Verminderung der Verzunderung der Oberfläche des Metallsubstrats, insbesondere in der Nähe der Schweißnaht, verwendet.

Gleichermaßen kann es im Rahmen der vorliegenden Erfindung vorgesehen sein, dass die Sauerstoffbarrierebeschichtung zur Verhinderung und/oder Verminderung der Anhaftung von Metallspritzern verwendet wird. Insbesondere wird im Rahmen der vorliegenden Erfindung einerseits eine Anhaftung von Metallspritzern wirkungsvoll verhindert, andererseits lassen sich dennoch Metallspritzer, insbesondere auf der erfindungsgemäß verwendeten Sauerstoffbarrierebeschichtung anhaftende Metallspritzer, mechanisch einfach, beispielsweise durch Behandlung mittels Bürsten, entfernen.

Gleichermaßen kann es im Rahmen der vorliegenden Erfindung vorgesehen sein, dass die Sauerstoffbarrierebeschichtung zur Verhinderung und/oder Verminderung der Anhaftung von Mikroschlacken und/oder Schmauch eingesetzt wird. Auch eventuelle anhaftende Rückstände, wie beispielsweise Mikroschlacken, lassen sich mechanisch einfach durch Bürsten oder beispielsweise durch Behandlung mit Tüchern und Vliesen wirkungsvoll entfernen.

Gemäß einer bevorzugten Ausführungsform der vorliegenden Erfindung ist es vorgesehen, dass das Schweißverfahren kein Punktschweißverfahren ist. Beim Punktschweißen handelt es sich um ein Pressschweißverfahren, insbesondere um ein elektrisches Widerstandsschweißverfahren gemäß EN ISO 4063 : Prozess 21. Beim Punktschweißverfahren werden üblicherweise zwei Stahlbleche zunächst mit zwei gegenüberliegenden Elektroden zusammengepresst und ein Schweißstrom anschließend durch die Elektroden in das Blech geleitet. An den Grenzflächen zwischen den beiden Blechen befindet sich der größte elektrische Widerstand, so dass an dieser Stelle das Metall kurzzeitig erwärmt und unter Druck gefügt wird. Beim Punktschweißen treten hohe Temperaturen nur sehr kurzzeitig und lokal äußerst begrenzt auf, so dass weder Metallspritzer noch Verzunderungen oder Schmauch ein Problem darstellen.

Im Rahmen der vorliegenden Erfindung ist es üblicherweise vorgesehen, dass die Schutzbeschichtung ohne Erwärmung des Substrats auf Temperaturen oberhalb von 500 °C, insbesondere ohne Warmumformung des Substrates, verwendet wird. Wie zuvor bereits ausgeführt, ist die Verwendung von Sauerstoffbarrierebeschichtungen, insbesondere Zunderschutzbeschichtungen, bei der Herstellung von Bauteilen aus warmumgeformten hochfesten Stählen üblich, wobei diese Bauteile durch Warmumformen bei Temperaturen von über 500 °C, insbesondere bei 950°C, erhalten werden. Bei Bauteilen, welche keiner Warmumformung ausgesetzt sind, werden üblicherweise keine Sauerstoffbarrierebeschichtungen, insbesondere keine Zunderschutzbeschichtungen, verwendet.

Was nun die Materialien angeht, aus welchem das Substrat bzw. die Substrate bestehen, so können hier sämtliche metallischen schweißbaren Materialien eingesetzt werden. Üblicherweise enthält das Substrat Eisen und/oder Aluminium und/oder deren Legierungen. Aluminiumsubstrate sind zwar nicht von Verzunderung betroffen, anhaftende Mikroschlacken und Metallspritzer erweisen sich jedoch auch in diesem Fall als problematisch.

Besonders gute Ergebnisse werden im Rahmen der vorliegenden Erfindung erhalten, wenn das Substrat aus Eisen und/oder dessen Legierungen besteht. In diesem Zusammenhang wird es besonders bevorzugt, wenn das Substrat aus Stahl besteht.

Im Rahmen der vorliegenden Erfindung kann es vorgesehen sein, dass die Sauerstoffbarrierebeschichtung 1 bis 10, insbesondere 1 bis 5, vorzugsweise 1 oder 2 Schichten, bevorzugt eine Schicht, aufweist. Im Rahmen der vorliegenden Erfindung ist es somit möglich, dass die Sauerstoffbarrierebeschichtung aus mehreren Schichten besteht, welche beispielsweise durch wiederholtes Auftragen einer Beschichtungszusammensetzung erhalten werden können. Bevorzugt ist es jedoch, wenn die Sauerstoffbarrierebeschichtung aus einer Schicht besteht.

Im Allgemeinen weist die Sauerstoffbarrierebeschichtung eine Schichtdicke im Bereich von 0,1 bis 50 µm, insbesondere 0,5 bis 40 µm, vorzugsweise 0,7 bis 30 µm, bevorzugt 1 bis 20 µm, besonders bevorzugt 1 bis 10 µm, ganz besonders bevorzugt 1 bis 5 µm, auf. Beste Ergebnisse werden erhalten, wenn die Sauerstoffbarrierebeschichtung eine Schichtdicke von 2 bis 3 µm aufweist.

Die Sauerstoffbarrierebeschichtung kann aus einer Vielzahl von Materialien aufgebaut sein. Im Rahmen der vorliegenden Erfindung ist es üblicherweise vorgesehen, dass die Sauerstoffbarrierebeschichtung eine anorganisch basierte Matrix, insbesondere ein ausgehärtetes Bindemittel bzw. ein ausgehärtetes Bindemittelsystem, aufweist. Im Rahmen der vorliegenden Erfindung hat es sich bewährt, wenn die Sauerstoffbarrierebeschichtung die anorganisch basierte Matrix in Mengen von 10 bis 100 Gew.-%, insbesondere 10 bis 70 Gew.-%, vorzugsweise 20 bis 65 Gew.-%, bevorzugt 40 bis 65 Gew.-%, bezogen auf die Sauerstoffbarrierebeschichtung, aufweist. Die Sauerstoffbarrierebeschichtung kann gemäß einer besonderen Ausführungsform der vorliegenden Erfindung vollständig oder nahezu vollständig aus der anorganisch basierten Matrix, d. h. aus dem abgebundenen bzw. vernetzten Bindemittel, bestehen und somit in Form eines Klarlacks vorliegen.

Im Allgemeinen wird die anorganisch basierte Matrix der Sauerstoffbarrierebeschichtung durch anorganische Oxide, insbesondere Oxide des Siliciums, Titans und/oder Zirkoniums gebildet, vorzugsweise durch Siliciumdioxid und/oder Titandioxid, bevorzugt Siliciumdioxid. In diesem Zusammenhang kann es vorgesehen sein, dass beispielsweise auch Mischoxide bzw. Co-Kondensationsprodukte aus silicium-, titan- und zirkoniumhaltigen Vorläufersubstanzen, sogenannte Präkursoren, gemeinsam verwendet werden. Bevorzugt wird es jedoch, wenn das anorganische Oxid Siliciumdioxid ist, welches gegebenenfalls geringe Mengen an Titandioxid enthält.

Gemäß einer bevorzugten Ausführungsform der vorliegenden Erfindung ist die anorganisch basierte Matrix organisch modifiziert. Die organische Modifizierung der anorganisch basierten Matrix resultiert in einer erhöhten Flexibilität der der Sauerstoffbarriereschicht und verhindert somit ein Abplatzen bzw. ein Ablösen der Beschichtung sowie eine Rissbildung innerhalb der Beschichtung.

Im Rahmen der vorliegenden Erfindung werden besonders gute Ergebnisse erhalten, wenn das Bindemittel mittels organischer Reste modifiziert ist. In diesem Zusammenhang kann es vorgesehen sein, dass die organischen Reste ausgewählt sind aus Alkyl-, Aryl- und Olefinresten sowie deren Mischungen und Umsetzungsprodukten. Hierbei kann es vorgesehen sein, dass die organischen Reste ausgewählt sind aus C₁- bis C₁₀-Alkylresten, insbesondere C₁- bis C₅-Alkylresten, vorzugsweise C₁- bis C₃-Alkylresten, bevorzugt C₁- und/oder C₂-Alkylreste sind.

Gleichfalls kann es vorgesehen sein, dass die organischen Reste ausgewählt sind aus C₆- bis C₂₀-Arylresten, insbesondere C₆- bis C₁₅-Arylresten, vorzugsweise C₆- bis C₁₀-Arylresten.

Darüber hinaus ist es möglich, dass die organischen Reste ausgewählt sind aus C₂- bis C₁₀-Olefinresten, insbesondere C₂- bis C₈-Olefinresten, vorzugsweise C₂- bis C₅-Olefinresten, bevorzugt C₂- und/oder C₃-Olefinresten, besonders bevorzugt Vinylreste sind.

Besonders gute Ergebnisse werden im Rahmen der vorliegenden Erfindung erhalten, wenn die organische Reste ausgewählt sind aus Methyl- und/oder Ethylresten sowie Methylphenylresten.

Im Allgemeinen ist die anorganisch basierte Matrix der Sauerstoffbarrierebeschichtung aus Silanen, Polysilanen, Silanhydrolysaten, Polysiloxanen, Silikonaten, Silikaten, Titanaten, Polytitanaten, Zirkonaten und Aluminiumdihydrogenphosphat, insbesondere Silanen, Silanhydrolysaten und Polysiloxanen, sowie deren Mischungen, erhältlich. Insbesondere anorganisch basierte Matrizes auf Basis von Siliciumdioxid zeigen eine hohe Undurchlässigkeit gegenüber Gasen und hervorragende Antihafteigenschaften bei gleichzeitig guter Flexibilität der Beschichtung.

Die anorganisch basierte Matrix der Sauerstoffbarrierebeschichtung kann durch Polymerisations- und/oder Kondensationsreaktionen, insbesondere von organischen und anorganischen Gruppen, erhalten werden.

Gemäß einer bevorzugten Ausführungsform der vorliegenden Erfindung wird die anorganisch basierte Matrix der Sauerstoffbarrierebeschichtung durch Kondensationsreaktionen anorganischer Gruppen erhalten. Die anorganisch basierte Matrix der Sauerstoffbarrierebeschichtung wird somit bevorzugt durch Kondensationsreaktionen anorganischer Hydroxide, welche beispielsweise durch Hydrolyse der entsprechenden Alkoxyverbindungen erhalten werden, hergestellt. Auf diese Weise werden besonders widerstandsfähige und auch unter erhöhter Temperatur oxidationsbeständige Beschichtungen erhalten, welche wirkungsvoll vor einer Verzunderung der Metalloberfläche schützen. Bei Verknüpfung der einzelnen Moleküle bzw. Partikel der Beschichtungszusammensetzung über organische Gruppen wird bei den Schweiß- und Trennprozessen eine zumindest partielle Oxidation der Kohlenstoffketten beobachtet, welche zu einer Verschlechterung der Schutzeinwirkung und zur Bildung von Inhomogenitäten in der Beschichtung führen kann.

Darüber hinaus werden im Rahmen der vorliegenden Erfindung sehr gute Ergebnisse erhalten, wenn die anorganisch basierte Matrix der Sauerstoffbarrierebeschichtung einen Kohlenstoffgehalt von höchstens 50 Gew.-%, insbesondere 40 Gew.-%, vorzugsweise 35 Gew.-%, bevorzugt 30 Gew.-%, bezogen auf die anorganische Matrix, aufweist.

Gleichermaßen ist es bevorzugt, wenn die anorganisch basierte Matrix der Sauerstoffbarrierebeschichtung einen Kohlenstoffgehalt im Bereich von 0,01 bis 50 Gew.-%, insbesondere 0,05 bis 40 Gew.-%, vorzugsweise 0,1 bis 35 Gew.-%, bevorzugt 0,1 bis 30 Gew.-%, bezogen auf die anorganisch basierte Matrix, aufweist.

Ein gewisser Kohlenstoffanteil in der anorganisch basierten Matrix ist oftmals vorteilhaft und auch notwendig, um - wie bereits zuvor ausgeführt - der Beschichtung die notwendige Flexibilität zu verleihen, jedoch hat sich herausgestellt, dass ein zu hoher Kohlenstoffanteil, insbesondere die Verwendung längerkettiger Kohlenstoffreste, zu einer Oxidation der organischen Bestandteile während der Schweiß- und/oder Trennvorgänge führt, was die Struktur der Beschichtung und somit die Korrosionsschutzwirkung schwächt.

Vollständig kohlenstofffreie Matrices mit guten mechanischen Eigenschaften lassen sich erhalten, wenn das Bindemittel der Beschichtungszusammensetzung für die Sauerstoffbarrierebeschichtung ausgewählt ist aus Polysilikaten, insbesondere Wasserglas, vorzugsweise Natrium- und/oder Kaliumwasserglas, oder Aluminiumdihydrogenphosphat.

Die anorganisch basierte Matrix der Sauerstoffbarrierebeschichtung ist üblicherweise aus lösemittel- und/oder wasserbasierten Beschichtungszusammensetzungen oder aus Ultra-High-Solid-Beschichtungszusammensetzungen mit einem Feststoffgehalt von 95 bis 100 Gew.-%, bezogen auf die Beschichtungszusammensetzung, erhältlich, wie nachfolgend noch ausgeführt wird.

Wie bereits erläutert, kann die Sauerstoffbarrierebeschichtung auch ohne Metallpartikel, d. h. in Form eines Klarlacks, ausgebildet sein. Gleichfalls kann die Sauerstoffbarrierebeschichtung mit inerten keramischen oder glasbasierten Partikeln, insbesondere Flakes, versehen sein. Nochmals deutlich verbessert werden können die Temperaturbeständigkeit und der Schutz vor Verzunderung, wenn die Sauerstoffbarrierebeschichtung Metallpartikel aufweist.

Im Rahmen der vorliegenden Erfindung ist es vorteilhaft, wenn die Sauerstoffbarrierebeschichtung Metallpartikel aufweist. Dabei kann es vorgesehen sein, dass die Sauerstoffbarrierebeschichtung mindestens 20 Gew.-%, insbesondere mindestens 30 Gew.-%, vorzugsweise mindestens 35 Gew.-%, Metallpartikel, bezogen auf die Sauerstoffbarrierebeschichtung, aufweist.

Es wird bevorzugt, wenn die Sauerstoffbarrierebeschichtung einen Anteil an Metallpartikeln im Bereich von 30 bis 90 Gew.-%, insbesondere 35 bis 80 Gew.-%, vorzugsweise 35 bis 60 Gew.-%, bezogen auf die Sauerstoffbarrierebeschichtung, aufweist.

Gleichermaßen kann es vorgesehen sein, dass die Sauerstoffbarrierebeschichtung einen Volumenanteil an Metallpartikeln im Bereich von 30 bis 90 Vol.-%, insbesondere 35 bis 80 Vol.-%, vorzugsweise 35 bis 60 Vol.-%, bezogen auf die Sauerstoffbarrierebeschichtung, aufweist.

Wenn die Sauerstoffbarrierebeschichtung Metallpartikel aufweist, so sind diese üblicherweise auf Basis von Metallen ausgewählt aus der Gruppe von Aluminium, Bismut, Wolfram, Nickel, Chrom, Vanadium und/oder Edelstahl sowie deren Mischungen und Legierungen ausgebildet. Besonders bevorzugt ist es dabei, wenn die Metallpartikel Aluminiumpartikel und/oder Aluminiumlegierungen enthaltende Partikel, insbesondere Aluminiumpartikel, sind.

Gleichfalls kann es vorgesehen sein, dass die Sauerstoffbarrierebeschichtung plättchenförmige und/oder kornförmige, insbesondere sphärische, Metallpartikel, vorzugsweise plättchenförmige Metallpartikel, aufweist. Es hat sich herausgestellt, dass plättchenförmige Metallpartikel, insbesondere Aluminiumflakes, eine hervorragende Sauerstoffbarriere darstellen und eine Verzunderung der Metalloberfläche auch bei hohen Temperaturen wirkungsvoll verhindern.

Was nun die Größe der verwendeten Metallpartikel anbelangt, so kann diese in weiten Bereichen variieren. Es hat sich bewährt, wenn die plättchenförmigen Metallpartikel eine Dicke von 10 bis 1.000 nm, insbesondere 25 bis 750 nm, vorzugsweise 40 bis 600 nm, bevorzugt 50 bis 500 nm, aufweisen.

Gleichfalls wird es bevorzugt, wenn die plättchenförmigen Metallpartikel einen Durchmesser von 50 nm bis 25 µm, insbesondere 100 nm bis 20 µm, vorzugsweise 250 nm bis 15 µm, bevorzugt 500 nm bis 10 µm, besonders bevorzugt 1 bis 8 µm, ganz besonders bevorzugt 1 bis 5 µm, aufweisen.

Sollte die Sauerstoffbarrierebeschichtung kornförmige bzw. sphärische Metallpartikel aufweisen, so haben diese üblicherweise Partikeldurchmesser im Bereich von 500 nm bis 10 µm, insbesondere 500 nm bis 5 µm, vorzugsweise 500 nm bis 3 µm.

Darüber hinaus kann vorgesehen sein, dass die Sauerstoffbarrierebeschichtung weitere Partikel, insbesondere Füllstoffe, enthält. Wenn die Sauerstoffbarrierebeschichtung Füllstoffe enthält, so kann deren Menge in weiten Bereichen variieren. Es hat sich jedoch bewährt, wenn die Sauerstoffbarrierebeschichtung die Füllstoffe in Mengen von 0,5 bis 10 Gew.-%, insbesondere 1 bis 8 Gew.-%, vorzugsweise 2 bis 5 Gew.-%, bezogen auf die Sauerstoffbarrierebeschichtung, aufweist.

Die Füllstoffe sollten in diesem Zusammenhang temperatur- und oxidationsbeständig sowie inert sein, d. h. sie dürfen unter Anwendungsbedingungen nicht reaktiv gegenüber weitern Bestandteilen der Beschichtung, des Substrats oder der Umgebung, insbesondere gegenüber Luftsauerstoff, sein. Gute Ergebnisse werden erhalten, wenn die Füllstoffe ausgewählt sind aus Wolframcarbid, Bornitrid, Glaspartikeln, Eisenphosphid, Zirkondioxid sowie deren Mischungen.

Die im Rahmen der vorliegenden Erfindung verwendete Sauerstoffbarrierebeschichtung ist üblicherweise aus einer Beschichtungszusammensetzung erhältlich bzw. wird aus einer Beschichtungszusammensetzung erhalten. Vorzugsweise wird die Beschichtungszusammensetzung zur Erzeugung der Sauerstoffbarrierebeschichtung auf ein Substrat aufgebracht. Im Allgemeinen erfolgt der Auftrag der Beschichtungszusammensetzung flächig und mit homogener Schichtdicke.

Die Sauerstoffbarrierebeschichtung ist im Rahmen der vorliegenden Erfindung üblicherweise der Trockenfilm, welcher beispielsweise nach Aushärten oder Vernetzen der Beschichtungszusammensetzung erhalten wird. Die auf das Substrat aufgetragenen Beschichtungszusammensetzung wird im Allgemeinen als Nassfilm oder Nasslack bezeichnet.

Im Rahmen der vorliegenden Erfindung wird die Beschichtungszusammensetzung üblicherweise durch gängige Auftragsmethoden auf das Substrat aufgebracht. Insbesondere kann die Beschichtungszusammensetzung beispielsweise durch Rakeln, Streichen, Pinseln, Rollen, Tauchen, Tauchschleudern, Spritzen oder Sprühen auf das Substrat aufgebracht werden.

Im Allgemeinen wird die Beschichtungszusammensetzung mit einer Schichtdicke im Bereich von 0,1 bis 60 µm, insbesondere 0,5 bis 50 µm, vorzugsweise 0,7 bis 35 µm, bevorzugt 1 bis 10 µm, besonders bevorzugt 1 bis 5 µm, ganz besonders bevorzugt 1 bis 3 µm, auf das Substrat aufgebracht.

Die Beschichtungszusammensetzung zur Herstellung der Sauerstoffbarrierebeschichtung weist üblicherweise mindestens einen organisch und/oder anorganisch basierten Matrixbildner, vorzugsweise mindestens einen anorganisch basierten Matrixbildner, und gegebenenfalls Hilfsstoffe und Additive auf.

Üblicherweise liegt die Beschichtungszusammensetzung in Form einer Dispersion vor. In diesem Zusammenhang kann es vorgesehen sein, dass die Beschichtungszusammensetzung organische Lösemittel und/oder Wasser enthält und/oder dass die Beschichtungszusammensetzung als Beschichtungszusammensetzung mit einem Feststoffanteil von 95 bis 100 Gew.-%, bezogen auf die Beschichtungszusammensetzung, vorliegt. Als organische Lösemittel kommen alle geeigneten Lösemittel in Betracht. Insbesondere geeignet sind aromatische und aliphatische Kohlenwasserstoffe sowie polare organische Lösemittel, wie beispielsweise Aceton, Alkohole, insbesondere C₁- bis C₂₀-Alkohole, vorzugsweise C₂- bis C₁₀-Alkohole, bevorzugt C₂- bis C₈-Alkohole, Nitrile oder Nitroverbindungen, insbesondere Nitropropan.

Vorzugsweise liegt die Beschichtungszusammensetzung als wasserbasiertes System vor. Wasserbasierte Systeme schonen die Umwelt und es müssen keine aufwendigen Vorrichtungen zum Sammeln bzw. zur Rückgewinnung der organischen Lösemittel bereitgestellt werden. Darüber hinaus ermöglicht die Verwendung wasserbasierter Systeme auch vor dem Hintergrund des Arbeitsschutzes einen breiten Einsatz der Beschichtungszusammensetzung, da Brandgefahr ausgeschlossen werden kann und keine gesundheitsschädlichen organischen Lösemittel in die Umgebung, insbesondere die Atemluft, entweichen.

Wenn die Beschichtungszusammensetzung organische Lösemittel und/oder Wasser enthält, so weist die Beschichtungszusammensetzung organische Lösemittel und/oder Wasser in Mengen von 30 bis 90 Gew.-%, insbesondere 40 bis 80 Gew.-%, vorzugsweise 50 bis 75 Gew.-%, bezogen auf die Beschichtungszusammensetzung, auf. Die besten Ergebnisse, insbesondere im Hinblick auf die Temperaturbeständigkeit der resultierenden Beschichtung, werden jedoch mit wasserbasierten Systemen erhalten, insbesondere wenn die Beschichtungszusammensetzung nicht mehr als 10 Gew.-%, insbesondere nicht mehr als 5 Gew.-%, vorzugsweise nicht mehr als 3 Gew.-%, bevorzugt nicht mehr als 1 Gew.-%, organische Lösemittel, bezogen auf die Beschichtungszusammensetzung, aufweist.

Was die Viskosität der erfindungsgemäßen Beschichtungszusammensetzung anbelangt, so kann diese naturgemäß in weiten Bereichen variieren. Besonders gute Ergebnisse werden jedoch erzielt, wenn die Beschichtungszusammensetzung eine dynamische Viskosität nach Brookfield bei 20 °C im Bereich von 1 bis 50.000 mPas, insbesondere 2 bis 10.000 mPas, vorzugsweise 5 bis 1.000 mPas, bevorzugt 5 bis 500 mPas, besonders bevorzugt 10 bis 100 mPas, aufweist.

Darüber hinaus kann es im Rahmen der vorliegenden Erfindung vorgesehen sein, dass die Beschichtungszusammensetzung den Matrixbildner in Mengen von 5 bis 100 Gew.-%, insbesondere 12 bis 80 Gew.-%, vorzugsweise 12 bis 75 Gew.-%, bevorzugt 15 bis 70 Gew.-%, besonders bevorzugt 15 bis 65 Gew.-%, bezogen auf die Beschichtungszusammensetzung, aufweist.

Wenn die Beschichtungszusammensetzung ein lösemittel- oder wasserbasiertes System ist, so enthält die Beschichtungszusammensetzung den Matrixbildner üblicherweise in Mengen von 5 bis 40 Gew.-%, insbesondere 10 bis 35 Gew.-%, vorzugsweise 12 bis 30 Gew.-%, bevorzugt 15 bis 25 Gew.-%, bezogen auf die Beschichtungszusammensetzung.

Gemäß einer bevorzugten Ausführungsform der vorliegenden Erfindung ist der Matrixbildner ausgewählt aus Silanen, Polysilanen, Silanhydrolysaten, Polysiloxanen, Silikonaten, Silikaten, Titanaten, Polytitanaten und Zirkonaten, insbesondere Silanen, Silanhydrolysaten, Polysiloxanen und Silikaten, sowie deren Mischungen. Die zuvor genannten Matrixbildner reagieren zu den entsprechenden anorganischen Oxiden, insbesondere zu den Oxiden des Siliciums, Titans bzw. Zirkoniums, wobei bei der Ausbildung der Sauerstoffbarrierebeschichtung siliciumbasierte Reagenzien bevorzugt sind.

Gemäß einer bevorzugten Ausführungsform der vorliegenden Erfindung ist der Matrixbildner der Beschichtungszusammensetzung zur Herstellung einer Sauerstoffbarrierebeschichtung organisch modifiziert.

Im Allgemeinen vernetzt und/oder härtet der Matrixbildner der Beschichtungszusammensetzung zur Herstellung einer Sauerstoffbarrierebeschichtung durch Kondensationsreaktionen anorganischer und/oder organischer Gruppen und/oder durch Polymerisationsreaktion organischer chemischer Gruppen aus. Bevorzugt wird es jedoch, wenn der Matrixbildner durch Kondensationsreaktionen anorganischer Gruppen vernetzt und/oder aushärtet. Auf diese Weise sind besonders widerstandsfähige, gasdichte und insbesondere oxidationsstabile Sauerstoffbarrierebeschichtungen zugänglich. Eine gewisse, geringe organische Modifizierung der Matrixbildner ist jedoch von Vorteil, da die organischen Gruppen der Beschichtung mehr Flexibilität verleihen.

Im Rahmen der vorliegenden Erfindung wird es daher bevorzugt, wenn der Matrixbildner organisch modifiziert, insbesondere mittels organischer Reste modifiziert, ist. Vorteilhafterweise sind die organischen Reste dabei ausgewählt aus Alkyl-, Aryl- und Olefinresten, insbesondere Alkyl- und Arylresten, sowie deren Mischungen.

Wenn die Beschichtungszusammensetzung zur Herstellung einer Gaskorrosionsschicht Alkylreste aufweist, so hat es sich bewährt, wenn die Alkylreste ausgewählt sind aus C₁- bis C₁₀-Alkylresten, insbesondere C₁- bis C₅-Alkylresten, vorzugsweise C₁- bis C₃-Alkylresten, bevorzugt C₁- und/oder C₂-Alkylreste sind.

Gleichermaßen ist es von Vorteil, wenn die Arylreste ausgewählt sind aus C₆- bis C₂₀-Arylresten, insbesondere C₆- bis C₁₅-Arylresten, vorzugsweise C₆- bis C₁₀-Arylresten.

Darüber hinaus kann es auch vorgesehen sein, dass die Olefinreste ausgewählt sind aus C₂- bis C₁₀-Olefinresten, insbesondere C₂- bis C₈-Olefinresten, insbesondere C₂- bis C₈-Olefinresten, vorzugsweise C₂- bis C₅-Olefinresten, bevorzugt C₂- und/oder C₃-Olefinresten, besonders bevorzugt Vinylreste sind.

Es hat sich jedoch im Rahmen der vorliegenden Erfindung als besonders günstig erwiesen, wenn die organischen Reste Methyl- und/oder Ethylreste und/oder Methylphenylreste sind.

Im Rahmen der vorliegenden Erfindung werden gute Ergebnisse erhalten, wenn der Matrixbildner ausgewählt ist aus Silanen der allgemeinen Formel I

R₄₋ₙSiXₙ (I)

mit
- R =: Alkyl, insbesondere C₁- bis C₅-Alkyl, vorzugsweise C₁- bis C₃-Alkyl, bevorzugt C₁- und/oder C₂-Alkyl;
Aryl, insbesondere C₆- bis C₂₀-Aryl, vorzugsweise C₆- bis C₁₅-Aryl, bevorzugt C₆- bis C₁₀-Aryl;
Olefin, insbesondere terminales Olefin, vorzugsweise C₂- bis C₁₀-Olefin, bevorzugt C₂- bis C₈-Olefin, besonders bevorzugt C₂- bis C₅-Olefin, ganz besonders bevorzugt C₂- und/oder C₃-Olefin, insbesondere bevorzugt Vinyl; Amin, insbesondere C₂- bis C₁₀-Amin, vorzugsweise C₂- bis C₈-Amin, bevorzugt C₂- bis C₅-Amin, besonders bevorzugt C₂- und/oder C₃-Amin;
Carbonsäure, insbesondere C₂- bis C₁₀-Carbonsäure, vorzugsweise C₂- bis C₈-Carbonsäure, bevorzugt C₂- bis C₅-Carbonsäure, besonders bevorzugt C₂- und/oder C₃-Carbonsäure;
Alkohol, insbesondere C₂- bis C₁₀-Alkohol, vorzugsweise C₂- bis C₈-Alkohol, bevorzugt C₂- bis C₅-Alkohol, besonders bevorzugt C₂- und/oder C₃-Alkohol;
- X =: Halogenid, insbesondere Chlorid und/oder Bromid;
Alkoxy, Insbesondere C₁- bis C₆-Alkoxy, besonders bevorzugt C₁- bis C₄- Alkoxy, ganz besonders bevorzugt C₁- und/oder C₂-Alkoxy; und
- n =: 1 bis 4, vorzugsweise 2 oder 3.

Im Rahmen der vorliegenden Erfindung werden gute Ergebnisse erhalten, wenn der Matrixbildner ausgewählt ist aus Silanen der allgemeinen Formel Ia

R₄₋ₙSiXₙ (la)

mit
- R =: C₁- bis C₃-Alkyl, insbesondere C₁- und/oder C₂-Alkyl;
C₆- bis C₁₆-Aryl, insbesondere C₆- bis C₁₀-Aryl;
C₂- und/oder C₃-Olefin, insbesondere Vinyl;
- X =: Alkoxy, Insbesondere C₁- bis C₆-Alkoxy, besonders bevorzugt C₁- bis C₄-Alkoxy, ganz besonders bevorzugt C₁- und/oder C₂-Alkoxy; und
- n =: 2 oder 3.

Bevorzugt weist der Matrixbildner der Beschichtungszusammensetzung Alkylsilane, insbesondere Trialkoxyalkylsilane, Dialkoxydialkysilane und/oder Alkoxytrialkylsilane, und/oder Arylsilane, insbesondere Trialkoxyarylsilane, Dialkoxydiarylsilane und/oder Alkoxytriarylsilane, auf.

Im Rahmen der vorliegenden Erfindung werden sehr gute Ergebnisse erhalten, wenn der Matrixbildner ausgewählt ist aus Silanhydrolysaten, Polysiloxanen, insbesondere Alkylpolysiloxanen, vorzugsweise C₁- bis C₃-Alkylpolysiloxanen und/oder C₁- bis C₃-Alkoxyalkylpolysiloxan, und/oder Arylpolysiloxanen, vorzugsweise C₆- bis C₁₀-Arylpolysiloxanen und C₆- bis C₁₀-Alkoxyarylpolysiloxanen. In diesem Zusammenhang wird es bevorzugt, wenn der Matrixbildner ein gewichtsmittlere Molekulargewicht M_{w} im Bereich von 200 bis 200.000 g/mol, insbesondere 500 bis 150.000 g/mol, vorzugsweise 1.000 bis 100.000 g/mol , bevorzugt 2.000 bis 75.000 g/mol, besonders bevorzugt 5.000 bis 50.000 g/mol, aufweist.

Die Molekulargewichte können dabei insbesondere mittels Gelpermeationschromatogrophie (GPC) bestimmt werden, insbesondere gemäß DIN 55671, vorzugsweise unter Verwendung eines Polystyrolstandards.

Hierbei hat es sich bewährt, wenn die Beschichtungszusammensetzung als Matrixbildner Alkoxymethylsilikonharze und/oder Alkoxymethylphenylsilikonharze enthält, insbesondere mit den zuvor genannten Molekulargewichten.

Darüber hinaus kann es vorgesehen sein, dass der Matrixbildner ausgewählt ist aus Titanaten der allgemeinen Formel II

TiX₄ (II)

mit
- X =: Halogenid, insbesonder Chlorid und/oder Bromid;
Alkoxy, insbesondere C₁- bis C₈-Alkoxy, vorzugsweise C₁- bis C₆-Alkoxy, bevorzugt C₁- bis C₄-Alkoxy.

In diesem Zusammenhang hat es sich bewährt, wenn der Matrixbildner ausgewählt ist aus Titanaten der allgemeinen Formel IIa

TiX₄ (IIa)

mit
- X =: Alkoxy, insbesondere C₁- bis C₈-Alkoxy, vorzugsweise C₁- bis C₆-Alkoxy, bevorzugt C₁- bis C₄-Alkoxy.

Gleichermaßen kann es vorgesehen sein, dass der Matrixbildner ausgewählt ist aus Zirkonaten der allgemeinen Formel III

ZrX₄ (III)

mit
- X =: Halogenid, insbesondere Chlorid und/oder Bromid;
Alkoxy, insbesondere C₁- bis C₈-Alkoxy, vorzugsweise C₁- bis C₆-Alkoxy, bevorzugt C₁- bis C₄-Alkoxy.

Hierbei werden besonders gute Ergebnisse erhalten, wenn der Matrixbildner ausgewählt ist aus Zirkonaten der allgemeinen Formel IIIa

ZrX₄ (IIIa)

mit
- X =: Alkoxy, insbesondere C₁- bis C₈-Alkoxy, vorzugsweise C₁- bis C₆-Alkoxy, bevorzugt C₁- bis C₄-Alkoxy.

Darüber hinaus kann im Rahmen der vorliegenden Erfindung ein Silikonat als Matrixbildner verwendet werden. Besonders gute Ergebnisse werden hierbei erhalten, wenn ein als Silikonat der allgemeinen Formel IV

HO-[Si(R)(OM)-O-]ₙH (IV)

mit
- n =: 1 bis 6, insbesondere 1 bis 3, vorzugsweise 1;
- R =: C₁- bis C₁₀-Alkyl und/oder C₆- bis C₁₅Aryl,
insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl,
besonders bevorzugt C₁- bis C₃-Alkyl;
- M =: einwertiges Metall,
insbesondere Alkalimetall, vorzugsweise Natrium oder Kalium;
eingesetzt wird. In diesem Zusammenhang hat es sich bewährt, wenn das Silikonat ausgewählt ist aus Natriummethylsilikonat, Kaliummethylsilikonat, Natriumpropylsilikonat und Kaliumpropylsilikonat.

Gleichfall ist es möglich, dass der Matrixbildner ausgewählt ist aus Polysilikaten, insbesondere Wasserglas, vorzugsweise Natrium- und/oder Kaliumwasserglas, oder Aluminiumdihydrogenphosphat. Mit den vorgenannten Matrixbildnern lassen sich vollständig kohlenstofffreie Matrices mit guten mechanischen Eigenschaften erhalten.

Gleichermaßen kann es vorgesehen sein, dass der Matrixbildner ausgewählt ist aus Kieselsäuren, Titandioxid und Zirkoniumoxid, vorzugsweise Kieselsäuren, wobei diese Matrixbildner üblicherweise in Partikelform vorliegen und insbesondere in geringen Mengen, vorzugsweise in Mengen von 0,1 bis 10 Gew.-%, bevorzugt 1 bis 5 Gew.-%, bezogen auf die Beschichtungszusammensetzung, eingesetzt werden. Falls Kieselsäuren, Titandioxid und/oder Zirkoniumoxid als Matrixbildner eingesetzt werden, so weist die Beschichtungszusammensetzung üblicherweise mindestens einen weiteren Matrixbildner auf um die notwenige Kohäsion der Beschichtung zu gewährleisten.

Im Rahmen der vorliegenden Erfindung ist es möglich, dass die Beschichtungszusammensetzung mehrere unterschiedliche Matrixbildner, insbesondere reaktive Matrixbildner, umfasst. Besonders gute Ergebnisse werden in diesem Zusammenhang erhalten, wenn die Beschichtungszusammensetzung ausschließlich Matrixbildner auf Siliciumbasis aufweist.

Besonders gute Ergebnisse können im Rahmen der vorliegenden Erfindung oftmals erhalten werden, wenn die Beschichtungszusammensetzung mindestens zwei unterschiedliche Matrixbildner, insbesondere zwei reaktive Matrixbildner, vorzugsweise zwei reaktive Matrixbildner auf Siliziumbasis, umfasst. Unter einem reaktiven Matrixbildner ist dabei im Rahmen der vorliegenden Erfindung ein Matrixbildner zu verstehen, welcher über reaktive funktionelle chemische Gruppen verfügt. Dies können beispielsweise hydrolisierbare oder polymerisierbare Gruppen sein. Die funktionellen chemischen Gruppen müssen es erlauben, unter Vernetzungsbedingungen eine Reaktion mit weiteren Matrixbildnermolekülen bzw. -partikeln einzugehen. Die jeweiligen Matrixbildner sind dabei in ihren Reaktivitäten so auszuwählen, dass eine gleichmäßige Vernetzung stattfindet, welche einen homogenen Einbau von beispielsweise Metallpartikeln und sonstigen Additiven ermöglicht.

Gemäß einer bevorzugten Ausführungsform der vorliegenden Erfindung ist es vorgesehen, dass die Beschichtungszusammensetzung Metallpartikel aufweist.

Eine bevorzugte Beschichtungszusammensetzung enthält folglich
(a) mindestens einen anorganisch basierten Matrixbildner,
(b) Metallpartikel und
(c) gegebenenfalls Hilfsstoffe und Additive.

Wenn die Beschichtungszusammensetzung zur Herstellung der Sauerstoffbarrierebeschichtung Metallpartikel aufweist, so kann deren Gehalt in weiten Bereichen variieren. Es hat sich jedoch bewährt, wenn die Beschichtungszusammensetzung - insbesondere bei Verwendung von lösemittel- oder wasserbasierten Beschichtungszusammensetzungen - mindestens 1 Gew.-%, insbesondere mindestens 5 Gew.-%, vorzugsweise mindestens 10 Gew.-%, bevorzugt mindestens 15 Gew.-%, Metallpartikel, bezogen auf die Beschichtungszusammensetzung, aufweist.

Gleichermaßen werden besonders gute Ergebnisse erhalten, wenn die Beschichtungszusammensetzung - insbesondere bei Verwendung von lösemittel- oder wasserbasierten Beschichtungszusammensetzungen - einen Anteil an Metallpartikeln im Bereich von 1 bis 50 Gew.-%, insbesondere 5 bis 45 Gew.-%, vorzugsweise 10 bis 40 Gew.-%, bevorzugt 15 bis 40 Gew.-%, bezogen auf die Beschichtungszusammensetzung, aufweist.

In diesem Zusammenhang kann es insbesondere vorgesehen sein, dass die Beschichtungszusammensetzung plättchenförmige und/oder kornförmige, insbesondere sphärische, Metallpartikel, vorzugsweise plättchenförmige, Metallpartikel, aufweist, insbesondere wie zuvor beschrieben.

Besonders gute Ergebnisse werden im Rahmen der vorliegenden Erfindung erhalten, wenn die Beschichtungszusammensetzung plättchenförmige Metallpartikel auf Basis von Zink, Aluminium und/oder Magnesium sowie deren Legierungen, vorzugsweise plättchenförmige Aluminiumpartikel, enthält.

Im Allgemeinen ist es vorgesehen, dass die Additive und/oder Hilfsstoffe der Beschichtungszusammensetzung ausgewählt sind aus der Gruppe von Rheologieadditiven, Konservierungsmitteln, Stabilisatoren, Säuren und/oder Basen, Tensiden, entschäumenden Komponenten, Filmbildnern, Wachsen, organischen UV-Absorbern, biogenen Wirkstoffen, Verlaufsmitteln, Dispergierhilfsmitteln, Emulgatoren, Netzmitteln, Füllstoffen, pH-Stabilisatoren und pH-Einstellmitteln.

Im Rahmen der vorliegenden Erfindung kann es darüber hinaus vorgesehen sein, dass die Beschichtungszusammensetzung bei erhöhter Temperatur und/oder durch Bestrahlung, vorzugsweise bei erhöhter Temperatur, vernetzt und/oder aushärtet.

Im Rahmen der vorliegenden Erfindung ist es somit möglich, bei Raumtemperatur, insbesondere im Temperaturbereich von 20 bis 30 °C, härtende bzw. vernetzende Systeme bereitzustellen. Bei Raumtemperatur härtende bzw. vernetzende Systeme besitzen den Vorteil, dass keine besondere Ausrüstung bzw. Vorrichtung zur Aushärtung bzw. Vernetzung der Beschichtungszusammensetzung benötigt wird. Eine Härtung bzw. Vernetzung bei höheren Temperaturen führt jedoch zu einer starken Vernetzung der Moleküle untereinander sowie zu einer verbesserten Haftung an dem Substrat. Wenn die Beschichtungszusammensetzung bei erhöhter Temperatur vernetzt bzw. aushärtet, so vernetzt bzw. härtet die Beschichtungszusammensetzung üblicherweise bei Temperaturen im Bereich von 30 bis 350 °C, vorzugsweise 50 bis 300 °C, bevorzugt 100 bis 250 °C, besonders bevorzugt 150 bis 200 °C.

Falls die Beschichtungszusammensetzung bei erhöhter Temperatur vernetzt bzw. aushärtet, so vernetzt bzw. härtet die Zusammensetzung üblicherweise innerhalb eines Zeitraums von 1 Minute bis 2 Stunden, insbesondere 2 Minuten bis 1 Stunde, vorzugsweise 3 bis 30 Minuten, bevorzugt 4 bis 20 Minuten, besonders bevorzugt 5 bis 15 Minuten, aus.

Gleichermaßen kann es jedoch auch vorgesehen sein, dass die Beschichtungszusammensetzung bei Raumtemperatur vernetzt und/oder aushärtet. Diese Ausführungsform ist insbesondere von Vorteil, wenn die beschichteten Substrate aufgrund ihrer Größe nicht in einen Ofen verbracht oder mittels eines Heizstrahlers aufgeheizt werden können. Gleichfalls können größere Mengen Energie eingespart werden.

Wenn die Beschichtungszusammensetzung bei Raumtemperatur vernetzt und/oder aushärtet, so vernetzt und/oder härtet die Zusammensetzung üblicherweise in einen Zeitraum von 1 Minute bis 2 Stunden, insbesondere 2 Minuten bis 1 Stunde, vorzugsweise 3 bis 45 Minuten, bevorzugt 5 bis 30 Minuten, aus.

Gemäß einer besonderen Ausführungsform der vorliegenden Erfindung weist die Beschichtungszusammensetzung zur Herstellung einer Sauerstoffbarrierebeschichtung einen Feststoffanteil von 95 bis 100 Gew.-%, bezogen auf die Beschichtungszusammensetzung, auf. Gemäß dieser besonderen Ausführungsform ist die erfindungsgemäße Beschichtungszusammensetzung als lösemittelfreie bzw. lösemittelarme Ultra-High-Solid-Beschichtungszusammensetzung ausgebildet. Die Beschichtungszusammensetzung mit einem Feststoffanteil von 95 bis 100 Gew.-%, bezogen auf die Zusammensetzung, vernetzen üblicherweise unter Einwirkung von Luftfeuchtigkeit als Initiator.

Wie zuvor bereits ausgeführt, sind im Rahmen der vorliegenden Erfindung Beschichtungszusammensetzungen mit einem Feststoffanteil von 95 bis 100 Gew.-% vorteilhafter Weise flüssig ausgebildet und unterscheiden sich ihrer Viskosität nicht von wasser- und/oder lösemittelbasierten Systemen. Zur Einstellung der Viskosität kann die Beschichtungszusammensetzung mit einem Feststoffanteil von 95 bis 100 Gew.-% jedoch bis zum 5 Gew.-% Lösemittel oder Wasser enthalten.

Im Rahmen der vorliegenden Erfindung hat es sich bewährt, wenn gemäß dieser besonderen Ausführungsform die Beschichtungszusammensetzung den Matrixbildner in Mengen von 10 bis 100 Gew.-%, insbesondere 10 bis 70 Gew.-%, vorzugsweise 20 bis 65 Gew.-%, bevorzugt 40 bis 65 Gew.-%, bezogen auf die Beschichtungszusammensetzung, aufweist.

Gleichermaßen kann es wenn gemäß dieser Ausführungsform vorgesehen sein, dass die Beschichtungszusammensetzung mindestens 20 Gew.-%, insbesondere mindestens 30 Gew.-%, vorzugsweise mindestens 35 Gew.-%, Metallpartikel, bezogen auf die Beschichtungszusammensetzung, aufweist.

Weiterhin werden gute Ergebnisse gemäß dieser besonderen Ausführungsform erhalten, wenn die Beschichtungszusammensetzung einen Anteil an Metallpartikeln im Bereich von 30 bis 90 Gew.-%, insbesondere 35 bis 80 Gew.-%, vorzugsweise 35 bis 60 Gew.-%, bezogen auf Beschichtungszusammensetzung, aufweist.

Es zeigt die Figurendarstellung gemäß
- Fig. 1: zwei mittels Metallschutzgasschweißen mit aktivem Schutzgas (MAG) gefügte Baustahlplatten, deren untere Hälften mit einer Sauerstoffbarrierebeschichtung versehen sind;
- Fig. 2: die Baustahlplatten gemäß Fig. 1 nach Reinigung mit einer weichen Bürste;
- Fig. 3: ein Schnitt durch die Baustahlplatten gemäß Fig. 2 in der Nähe der Schweißnaht im unbeschichteten Bereich;
- Fig. 4: einen Schnitt durch das Substrat gemäß Fig. 2 in der Nähe der Schweißnaht im beschichteten Bereich;
- Fig. 5: zwei mittels Lichtbogenhandschweißens gefügte Baustahlplatten deren untere Hälften mit einer Sauerstoffbarrierebeschichtung beschichtet sind und
- Fig. 6: die gefügten Baustahlplatten gemäß Fig. 5 nach Reinigung mit einer weichen Bürste.

Weiterer Gegenstand der vorliegenden Erfindung - gemäß einem **zweiten** Aspekt der vorliegenden Erfindung - ist ein Verfahren zum Fügen von metallischen Substraten mittels Schweißen, wobei
(a) in einem ersten Verfahrensschritt insbesondere zumindest bereichsweise eine Sauerstoffbarrierebeschichtung auf die Metallsubstrate aufgetragen wird und
(b) in einem nachfolgenden Verfahrensschritt die Metallsubstrate durch Schweißen gefügt werden.

Im Rahmen der vorliegenden Erfindung ist es üblicherweise vorgesehen, dass die Sauerstoffbarrierebeschichtung in Verfahrensschritt (a) durch Auftragung einer Beschichtungszusammensetzung und anschließendes Vernetzen und/oder Aushärten der Beschichtungszusammensetzung erhalten wird.

Was in diesem Zusammenhang die Auftragung der Beschichtungszusammensetzung in Verfahrensschritt (a) anbelangt, so kann diese in jeder geeigneten Weise erfolgen. Insbesondere kann die Aufbringung der Beschichtungszusammensetzung mittels Rakeln, Rollen, Pinseln, Tauchen, Tauchschleudern, Spritzen oder durch Sprühauftrag, vorzugsweise durch Tauchen oder Sprühauftrag, erfolgen.

Im Rahmen der vorliegenden Erfindung kann die Beschichtungszusammensetzung auch an bestehenden Bauteilen bzw. Anlagen aufgebracht und das Bauteil anschließend geschweißt werden.

Im Rahmen der vorliegenden Erfindung kann darüber hinaus vorgesehen sein, dass die Sauerstoffbarrierebeschichtung im Anschluss an den Schweißvorgang in Verfahrensschritt (b) wieder entfernt wird. Die Sauerstoffbarrierebeschichtung muss üblicherweise nicht entfernt werden, da sie beispielsweise problemlos überlackierbar ist. Für bestimmte Verfahren, wie beispielsweise die kathodische Tauchlackierung (KTL) kann es jedoch notwendig sein, dass aufgrund der in der Regel geringen elektrischen Leitfähigkeit der erfindungsgemäß verwendeten Sauerstoffbarrierebeschichtung, die Entfernung der Sauerstoffbarrierebeschichtung notwendig oder sinnvoll ist. Was nun die Entfernung der Sauerstoffbarrierebeschichtung im Anschluss an Verfahrensschritt (b) anbelangt, so kann diese gleichfalls auf vielfältige Art und Weise erfolgen.

Im Rahmen der vorliegenden Erfindung kann die Beschichtungszusammensetzung im Anschluss an Verfahrensschritt (b) beispielsweise durch Behandlung mit Säuren oder Basen, insbesondere die sogenannte alikalische Beize, oder durch Behandlung mit organischen Lösemitteln, wie beispielsweise Aceton, wieder rückstandslos entfernt werden. Die Beschichtungszusammensetzung kann darüber hinaus auch mechanisch, beispielsweise durch Sand- oder Pulverstrahlen oder durch Behandlung mittels Hochdruckreinigern, entfernt werden, wobei eine chemische Entfernung durch Säuren, Basen oder organische Lösemittel bevorzugt wird. Die Beschichtung kann beispielsweise durch Behandlung mit 20 %iger Natronlauge, oder 20 %iger Salzsäure oder mit tensidhaltigen Reinigern von der Substratoberfläche entfernt werden. Eine zusätzliche mechanische Reinigung erleichtert dabei die Entfernung der Sauerstoffbarrierebeschichtung; ergänzend zu den bereits genannten Methoden kann die Sauerstoffbarrierebeschichtung mit Tüchern und Vliesen, Bürsten oder Ultraschall behandelt werden.

Für weitergehende Einzelheiten zu diesem Erfindungsaspekt kann auf die vorherigen Erfindungsaspekte zu der erfindungsgemäßen Verwendung einer Sauerstoffbarrierebeschichtung verwiesen werden, welche in Bezug auf das erfindungsgemäße Verfahren entsprechend gelten.

Wiederum weiterer Gegenstand der vorliegenden Erfindung gemäß einem **dritten** Aspekt der vorliegenden Erfindung - ist ein Verfahren zum Trennen von metallischen Substraten, wobei
(a) in einem ersten Verfahrensschritt insbesondere zumindest bereichsweise eine Sauerstoffbarrierebeschichtung auf das und/oder die Metallsubstrat(e) aufgebracht wird und
(b) in einem nachfolgenden Verfahrensschritt das und/oder die Metallsubstrat(e) getrennt werden.

Im Rahmen der vorliegenden Erfindung erfolgt das Trennen von metallischen Substraten üblicherweise durch Plasmaschneiden oder Laserschneiden.

Für weitergehende Einzelheiten zu dem erfindungsgemäßen Trennverfahren kann auf die obigen Ausführungen zu den übrigen Erfindungsaspekten verwiesen werden, welche in Bezug auf das erfindungsgemäße Trennverfahren entsprechend gelten.

Schließlich ist wiederum weiterer Gegenstand der vorliegenden Erfindung - gemäß einem **vierten** Aspekt der vorliegenden Erfindung - ein Metallsubstrat, welches nach einem der zuvor beschriebenen Verfahren erhältlich ist oder unter Verwendung einer Sauerstoffbarrierebeschichtung hergestellt worden ist.

Das erfindungsgemäße Metallsubstrat zeichnet durch deutlich geringere Anhaftung an Metallspritzern bzw. Schmauchspuren sowie einen weitaus geringeren Grad an Verzunderung im Bereich der Schweißnaht bzw. der Trennfuge auf. Durch die erfindungsgemäße Verwendung einer Sauerstoffbarrierebeschichtung bzw. durch das erfindungsgemäße Verfahren lässt sich die Verzunderung in der Nähe der Schweißnaht bzw. Trennfuge vermeiden oder zumindest um bis zu 50% in ihrer Schichtdicke reduzieren.

Der Gegenstand der vorliegenden Erfindung wird nachfolgend in nicht beschränkender Weise durch die Ausführungsbeispiele verdeutlicht.

### Ausführungsbeispiele

### 1. Beschichtungszusammensetzungen

Es werden vier Beschichtungszusammensetzungen untersucht, wobei drei Beschichtungszusammensetzungen (B1 bis B3) wässrige Systeme darstellen, während die vierte Beschichtungszusammensetzung (B4) ein lösemittelbasiertes System ist.

### 1.1. Beschichtungszusammensetzungen B1 bis B3 auf wässriger Siloxandispersionsbasis

Die Beschichtungszusammensetzungen B1 und B3 sind Klarlacke und enthalten keine Metallpartikel, wobei Beschichtungszusammensetzung B3 Glasflakes enthält. Die Beschichtungszusammensetzung B2 enthält Aluminiumpigmente.

**Tabelle 1: Beschichtungszusammensetzungen B1 bis B3**

| | Gewichtsteile | | |
|---|---|---|---|
| **Bestandteile** | **B1** | **B2** | **B3** |
| Alkoxymethylpolysiloxan zu 50 Gew.-% in Wasser dispergiert | | 35,00 | |
| Anti Terra 250 (Netz- und Dispergieradditiv) | | 3,30 | |
| Glasflakes 001 | 10,00 | | |
| Decomet 1006/30 (AI-Pigment) | | 10,00 | |
| demineralisiertes Wasser | | 41,70 | 36,70 |
| Optigel-Lsg. (Rheologieadditiv) | 20,00 | 20,00 | |
| Dynasylan Hydrosil 2926 (organofuntionelles Siloxanoligomer) | 35,00 | | 50,00 |
| Lithiumpolysilikat 35 Gew.-% in Wasser | 35,00 | | |
| Levasil 200 B (Kieselsol) | | | 13,30 |
| Byk 349 (Tensid) | | | 0,20 |
| Gesamt | 100,00 | 100,00 | 100,20 |

### 1.2. Beschichtungszusammensetzung B4 auf Lösemittelbasis entsprechend Beispiel 3 der US 7645404 A

120 g MTES (Alkyltrialkoxysilan) von Evonik und 40g Tetraethoxysilan werden mit 100 g einer 1%igen Trifluoressigsäurelösung gemischt und die Silane unter Rühren hydrolysiert. Danach werden 150 g einer Lösemittelmischung zugegeben (Butylglycol) sowie 0,2 g Disperbyk-180 als Netz- und Dispergieradditiv und 35 g Aluminiumpigment.

### 2. Herstellung der Schutzbeschichtungen

### 2.1. Herstellung der Schutzbeschichtungen bei Raumtemperatur

Mittels Pinseln, Aufsprühen, Rollen oder Tauchen werden die Beschichtungszusammensetzungen B1 bis B4 mit einer Schichtdicke von 5 µm auf Baustahl aufgebracht.

Der Baustahl kann wahlweise alkalisch entfettet, mit Lösemittel entfettet oder geschliffen werden, wobei keine besondere Reinigung notwendig ist, um eine ausreichende Haftung der Beschichtungszusammensetzungen zu erzielen.

Das aufgebrachte Material wird bei Raumtemperatur getrocknet und entfaltet seinen Zunder- und Schweißspritzerschutz bereits bei Staubtrockenheit.

Es werden die Beschichtungen T1 bis T4, wie in Tabelle 2 wiedergegeben, erhalten.

**Tabelle 2: Aus den Beschichtungszusammensetzungen B1 bis B4 durch Aushärten bei Raumtemperatur erhaltene Beschichtungen**

| **Beschichtungszusammensetzung** | **Beschichtung** |
|---|---|
| **B1** | **T1** |
| **B2** | **T2** |
| **B3** | **T3** |
| **B4** | **T4** |

### 2.2. Herstellung der Schutzbeschichtungen bei erhöhter Temperatur

Die Beschichtungszusammensetzungen B1 bis B4 werden gemäß 2.1 mit einer Schichtdicke von 5 µm auf Baustahl aufgebracht.

Die aufgebrachten Bechichtungszusammensetzungen werden bei 200 °C für 30 Minuten vernetzt. Im Vergleich zur Trocknung bei Raumtemperatur wird die Beschichtung höher vernetzt, so dass stärker haftende Beschichtungen mit höherer mechanischer Stabilität erhalten werden. Das gezielte Höhervernetzen kann beispielsweise vorteilhaft sein, wenn die Schichten überlackiert werden sollen.

Es werden die Beschichtungen T5 bis T8, wie in Tabelle 3 wiedergegeben, erhalten.

**Tabelle 2: Aus den Beschichtungszusammensetzungen B1 bis B4 durch Aushärten bei 200 °C erhaltene Beschichtungen**

| **Beschichtungszusammensetzung** | **Beschichtung** |
|---|---|
| **B1** | **T5** |
| **B2** | **T6** |
| **B3** | **T7** |
| **B4** | **T8** |

### 3. Anwendungsbeispiele

### 3.1. Schutzgasschweißen

2 Baustahlplatten mit einer Dicke von 5 mm werden entlang der Kanten mittels Schutzgasschweißens miteinander gefügt.

Die Baustahlplatten werden jeweils halbseitig mit den Schutzbeschichtungen T1 bis T4 versehen, während die andere Hälfte der Platten unbeschichtet bleibt.

Die Stromstärke beträgt 140 Ampere bei 24 Volt und 390 Watt Energieaufnahme. Das Schutzgas ist CORGON® 18 (Prozessgas nach DIN EN ISO 14175: M21-ArC-18) mit den Bestandteilen Kohlendioxid (CO2) 18 % und Argon 82%.

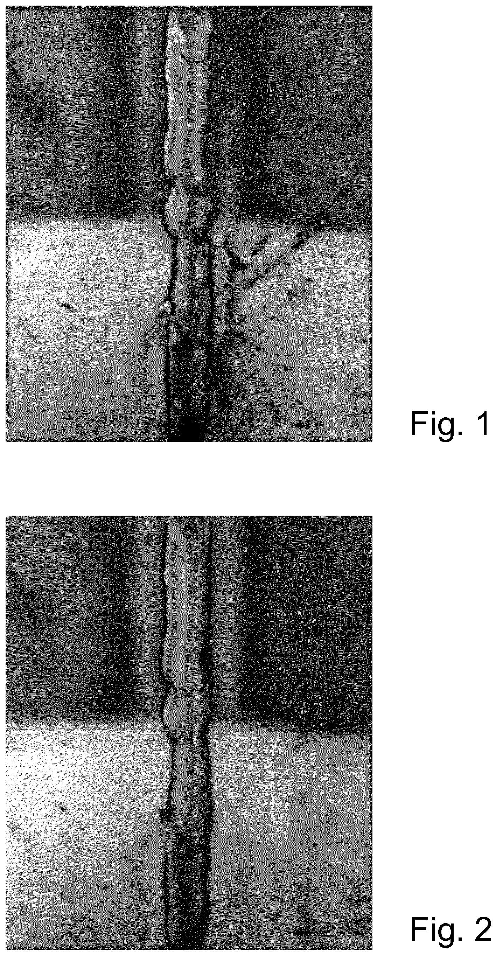

Die mit der Beschichtung T2 beschichteten schutzgasgeschweißten Platten sind in den Figuren 1 und 2 dargestellt. Der beschichtete Teil der Baustahlplatten ist in Fig. 1 und Fig. 2 als der untere, hellere Bereich der Baustahlplatten erkennbar.

Fig. 1 zeigt die geschweißten Baustahlplatten nach dem Schweißvorgang, während Fig. 2 dieselben Baustahlplatten nach Reinigung mit einer weichen Bürste zeigt. Es zeigt sich, dass im unbeschichteten Bereich eine Verzunderung bzw. Oxidation des Stahls entlang der Schweißnaht auftritt. Zusätzlich setzen sich Schweißspritzer bzw. geschmolzene Stahlkügelchen auf der unbeschichteten Substratfläche fest. Diese Metallspritzer sind nur mechanisch mit hohem Aufwand vom Substrat z.B. durch Schleifen zu entfernen. Auf der beschichteten Fläche perlen die Schweißspritzer vorwiegen ab oder lassen sich nach Erkalten leicht mit der Hand bzw. einer Bürste ohne zusätzlichen Aufwand entfernen. Zusätzlich ist die verzunderte Fläche des gleichen Substrats wie die Fig. 1 und 2 signifikant reduziert.

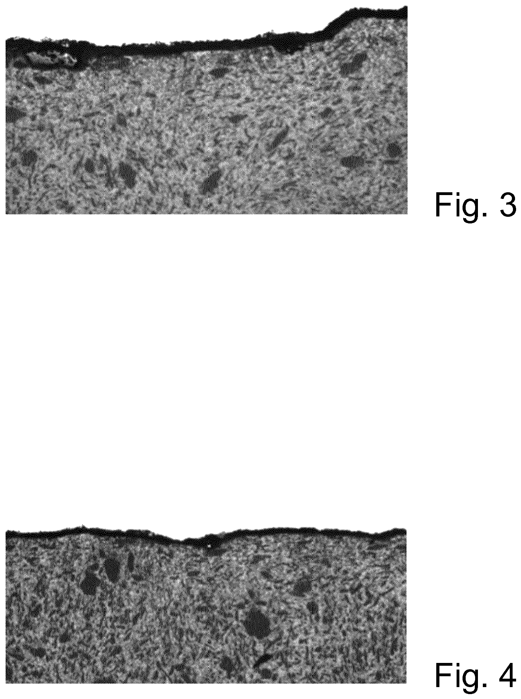

Die Aufnahmen in Fig. 3 und Fig. 4 stellen Schnittaufnahmen der in Figur 1 und 2 dargestellten verschweißten Baustahlbleche dar. Fig. 3 und Fig. 4 zeigen in 50facher Vergrößerung lichtmikroskopische Aufnahmen durch den verzunderten Bereich neben der Schweißnaht (Fig. 3) bzw. den beschichteten, nicht verzunderten Bereich neben der Schweißnaht (Fig. 4), der dunkle Bereich umfasst dabei jeweils die Beschichtung inklusive des Zunders. Es zeigt sich dass durch die Beschichtung die Zunderschichtdicke direkt im Randbereich der Schweißnaht in oben dargestelltem Beispiel um 50 % reduziert werden kann.

Es wird somit die Zunderbildung minimiert sowie eine leichte Reinigung des Schweißschmauchs und die Entfernung der Schweißperlen ohne mechanische aufwendige Bearbeitung durch die Beschichtung ermöglicht.

### 3.2. Lichtbogenhandschweißen

Der Versuch gemäß 3.1 wird wiederholt, wobei bei Baustahlbleche mittels Lichtbogenhandschweißens gefügt werden.

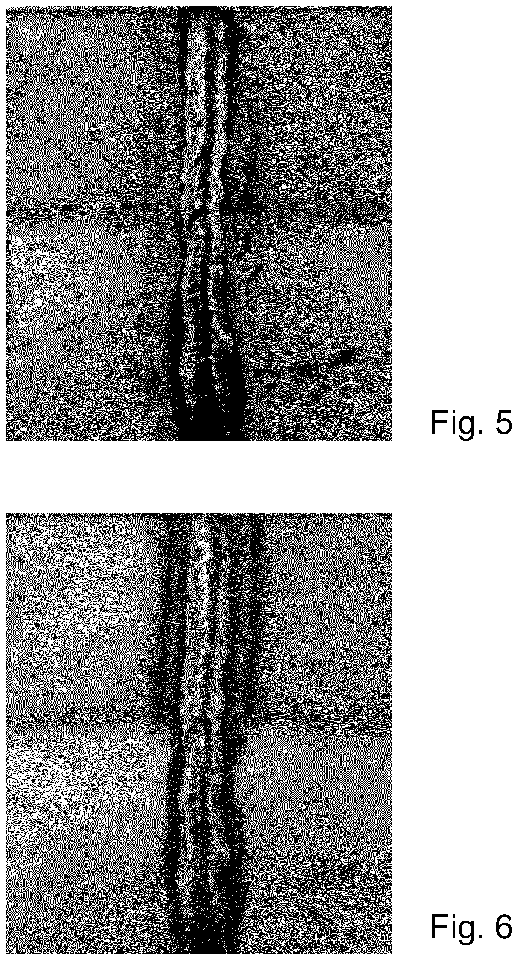

Die Ergebnisse des Lichtbogenhandschweißens sind in den Figuren 5 und 6 dargestellt. Es zeigt Fig. 5 die gefügten Baustahlplatten, wobei die unteren Hälften der Baustahlplatten mit der Beschichtung T2 beschichtet sind, während die obere Hälfte unbeschichtet ist. Fig. 5 zeigt die gefügten Baustahlplatten ohne Reinigung. Fig. 5, zeigt dieselben Baustahlplatten wie Fig. 6 allerdings nach Reinigung mit einer weichen Bürste. Es zeigt sich wie schon zuvor beim Schutzgasschweißen, dass im unbeschichteten Bereich Metallspritzer stärker anhaften, während sie im beschichteten Bereich nicht auf der Beschichtung anhaften können, sondern vielmehr abperlen bzw. durch die Behandlung mit einer Bürste entfernt werden können. Auch zeigen sich im beschichteten Bereich deutlich weniger Schmauchspuren und die Bereiche der Verzunderung, welche als dunkle Streifen neben der Schweißnaht zu erkennen sind, sind deutlich schmaler.

Es zeigt sich somit insgesamt, dass beim Lichtbogenhandschweißen die Verwendung einer Sauerstoffbarrierebeschichtung zu deutlich verbesserten Ergebnissen führt.

### 4. Entfernung der Beschichtungen

Jeweils zwei mit den Beschichtungen T1 bis T8 versehene Baustahlplatten werden mittels Metallschutzgasschweißens gemäß 3.1 gefügt und anschließend mit einer weichen Bürste gereinigt.

Die gefügten Metallteile werden anschließend in 20 %ige Natronlauge, 20 %ige Salzsäure oder Acetonbäder getaucht und dort 5 Minuten belassen. In allen Fällen kann die Beschichtung rückstandslos wieder entfernt werden. Die Reinigung der Substrate, d. h. die Entfernung der Beschichtung, kann dabei durch mechanisches Einwirken auf die Beschichtung, beispielsweise durch Wischen, Hochdruckstrahlen, Ultraschallbehandlung etc., beschleunigt und verbessert werden.

## Patentansprüche

1. Verwendung einer Sauerstoffbarrierebeschichtung als Schutzbeschichtung für Schmelzschweißverfahren und/oder Trennverfahren an metallischen Substraten, wobei das Schweißverfahren ausgewählt ist aus der Gruppe von Gasschmelzschweißen, Lichtbogenschweißen, Plasmaschweißen und Laserschweißen, wobei die Sauerstoffbarrierebeschichtung eine anorganisch basierte Matrix in Mengen von 40 bis 100 Gew.-%, bezogen auf die Sauerstoffbarrierebeschichtung, aufweist und wobei die anorganisch basierte Matrix aus Silanen, Polysilanen, Silanhydrolysaten, Polysiloxanen, Silikonaten, Titanaten, Polytitanaten, Zirkonaten und Aluminiumdihydrogenphosphat sowie deren Mischungen erhältlich ist.

2. Verwendung nach Anspruch 1, **dadurch gekennzeichnet, dass** die Sauerstoffbarrierebeschichtung eine Zunderschutzbeschichtung ist.

3. Verwendung nach nach Anspruch 1 oder 2, **dadurch gekennzeichnet, dass** das Substrat Eisen und/oder Aluminium und/oder deren Legierungen enthält.

4. Verwendung nach einem der vorangehenden Ansprüche, **dadurch gekennzeichnet, dass** die Sauerstoffbarrierebeschichtung 1 bis 10, insbesondere 1 bis 5, vorzugsweise 1 oder 2, Schichten, bevorzugt 1 Schicht, aufweist und/oder
dass die Sauerstoffbarrierebeschichtung eine Schichtdicke im Bereich von 0,1 bis 50 µm, insbesondere 0,5 bis 40 µm, vorzugsweise 0,7 bis 30 µm, bevorzugt 1 bis 20 µm, besonders bevorzugt 1 bis 10 µm, ganz besonders bevorzugt 1 bis 5 µm, aufweist.

5. Verwendung nach einem der vorangehenden Ansprüche, **dadurch gekennzeichnet, dass** die Sauerstoffbarrierebeschichtung die anorganisch basierte Matrix in Mengen von 40 bis 70 Gew.-%, bevorzugt 40 bis 65 Gew.-%, bezogen auf die Sauerstoffbarrierebeschichtung, aufweist.

6. Verwendung nach einem der vorangehenden Ansprüche, **dadurch gekennzeichnet, dass** die anorganisch basierte Matrix organisch modifiziert ist.

7. Verwendung nach einem der vorangehenden Ansprüche, **dadurch gekennzeichnet, dass** die anorganisch basierte Matrix aus Silanen, Silanhydrolysaten und Polysiloxanen sowie deren Mischungen erhältlich ist.

8. Verwendung nach einem der vorangehenden Ansprüche, **dadurch gekennzeichnet,**
**dass** die Sauerstoffbarrierebeschichtung mindestens 20 Gew.-%, insbesondere mindestens 30 Gew.-%, vorzugsweise mindestens 35 Gew.-%, Metallpartikel, bezogen auf die Sauerstoffbarrierebeschichtung, aufweist und/oder
**dass** die Sauerstoffbarrierebeschichtung einen Anteil an Metallpartikeln im Bereich von 30 bis 90 Gew.-%, insbesondere 35 bis 80 Gew.-%, vorzugsweise 35 bis 60 Gew.-%, bezogen auf die Sauerstoffbarrierebeschichtung, aufweist.

9. Verwendung nach Anspruch 8, **dadurch gekennzeichnet**, das die Sauerstoffbarrierebeschichtung Metallpartikel auf Basis von Metallen ausgewählt aus der Gruppe von Aluminium, Bismut, Wolfram, Nickel, Chrom, Vanadium und/oder Edelstahl sowie deren Mischungen und Legierungen , vorzugsweise Aluminiumpartikel, enthält.

10. Verwendung nach Anspruch 8 oder 9, **dadurch gekennzeichnet, dass** die Sauerstoffbarrierebeschichtung plättchenförmige und/oder kornförmige, insbesondere sphärische, Metallpartikel, vorzugsweise plättchenförmige, Metallpartikel, aufweist.

11. Verwendung nach einem der vorangehenden Ansprüche, **dadurch gekennzeichnet, dass** die Sauerstoffbarrierebeschichtung weitere Partikel, insbesondere Füllstoffe enthält, insbesondere in Mengen von 0,5 bis 10 Gew.-%, insbesondere 1 bis 8 Gew.-%, vorzugsweise 2 bis 5 Gew.-%, bezogen auf die Sauerstoffbarriereschicht, insbesondere wobei die weiteren Partikel ausgewählt sind aus Wolframcarbid, Bornitrid, Glaspartikeln, Eisenphosphid, Zirkondioxid, Edelstahl sowie deren Mischungen.

## Claims

1. Use of an oxygen barrier coating as a protective coating for fusion welding processes and/or separation processes on metallic substrates, wherein the welding process is selected from the group consisting of gas fusion welding, arc welding, plasma welding and laser welding, wherein the oxygen barrier coating comprises an inorganic based matrix in amounts from 40 to 100 wt%, in relation to the oxygen barrier coating, and wherein the inorganic based matrix is obtainable from silanes, polysilanes, silane hydrolysates, polysiloxanes, siliconates, titanates, polytitanates, zirconates and aluminium dihydrogenphosphate and mixtures thereof.

2. The use, according to Claim 1, **characterised in that** the oxygen barrier coating is an anti-scale protective coating.

3. The use according to Claim 1 or 2, **characterised in that** the substrate contains iron and/or aluminium and/or alloys thereof.

4. The use according to one of the preceding claims, **characterised in that**
the oxygen barrier coating comprises 1 to 10, in particular 1 to 5, preferably 1 or 2 layers, more preferably 1 layer, and/or
**in that** the oxygen barrier coating has a layer thickness in the range from 0.1 to 50 µm, in particular 0.5 to 40 µm, preferably 0.7 to 30 µm, more preferably 1 to 20 µm, particularly preferably 1 to 10 µm, most preferably 1 to 5 µm.

5. The use according to one of the preceding claims, **characterised in that** the oxygen barrier coating contains an inorganic-based matrix that comprises from 40 to 70 wt%, preferably 40 to 65 wt%, in relation to the oxygen barrier coating.

6. The use according to one of the preceding claims, **characterised in that** the inorganic-based matrix is organically modified.

7. The use according to one of the preceding claims, **characterised in that** the inorganic-based matrix can be obtained from silanes, silane hydrolysates and polysiloxanes and mixtures thereof.

8. The use according to one of the preceding claims, **characterised in that**
the oxygen barrier coating comprises at least 20 wt%, in particular at least 30 wt%, preferably at least 35 wt% of metal particles, in relation to the oxygen barrier coating, and/or
**in that** the oxygen barrier coating has a proportion of metal particles in the range from 30 to 90 wt%, in particular 35 to 80 wt%, preferably 35 to 60 wt%, in relation to the oxygen barrier coating.

9. The use according to Claim 8, **characterised in that** the oxygen barrier coating contains metal particles made from metals selected from the group consisting of aluminium, bismuth, tungsten, nickel, chromium, vanadium and/or stainless steel and mixtures and alloys thereof, preferably aluminium particles.

10. The use according to Claim 8 or 9, **characterised in that** the oxygen barrier coating comprises platelet-shaped and/or granular, in particular spherical, metal particles, preferably platelet-shaped metal particles.

11. The use according to one of the preceding claims, **characterised in that** the oxygen barrier coating contains further particles, in particular, fillers, in particular in the amount from 0.5 to 10 wt%, in particular1 to 8 wt%, preferably 2 to 5 wt%, in relation to the oxygen barrier layer, in particular wherein other particles are selected from tungsten carbide, boron nitride, glass particles, iron phosphide, zirconium dioxide, stainless steel and mixtures thereof.

## Revendications

1. Utilisation d'un revêtement faisant barrière à oxygène en tant que revêtement protecteur pour des procédés de soudage par fusion et/ou des procédés de séparation sur des substrats métalliques, le procédé de soudage étant choisi dans le groupe du soudage par fusion au gaz, du soudage à l'arc, du soudage au plasma et du soudage au laser, le revêtement faisant barrière à oxygène comprenant une matrice à base inorganique en quantités allant de 40 à 100% en poids, rapporté au revêtement faisant barrière à oxygène et la matrice à base inorganique pouvant être obtenue à partir de silanes, de polysilanes, d'hydrolysats de silanes, de polysiloxanes, de siliconates, de titanates, de polytitanates, de zirconates et de dihydrogénophosphate d'aluminium et leurs mélanges.

2. Utilisation selon la revendication 1, **caractérisée en ce que** le revêtement faisant barrière à oxygène est un revêtement de protection anti-calamine.

3. Utilisation selon la revendication 1 ou 2, **caractérisée en ce que** le substrat contient du fer et/ou de l'aluminium et/ou leurs alliages.

4. Utilisation selon l'une quelconque des revendications précédentes, **caractérisée en ce que**
le revêtement faisant barrière à oxygène a 1 à 10, en particulier 1 à 5, de préférence 1 ou 2 couches, de préférence 1 couche et/ou
**en ce que** le revêtement faisant barrière à oxygène présente une épaisseur de couche comprise dans la plage de 0,1 à 50 µm, en particulier de 0,5 à 40 µm, de préférence de 0,7 à 30 µm, préférentiellement de 1 à 20 µm, d'une manière particulièrement préférée de 1 à 10 µm, d'une manière tout particulièrement préférée de 1 à 5 µm.

5. Utilisation selon l'une quelconque des revendications précédentes, **caractérisée en ce que** le revêtement faisant barrière à oxygène comprend la matrice à base inorganique dans des quantités allant de 40 à 70 % en poids, de préférence de 40 à 65 % en poids, rapporté au revêtement faisant barrière à oxygène.

6. Utilisation selon l'une quelconque des revendications précédentes, **caractérisée en ce que** la matrice à base inorganique est organiquement modifiée.

7. Utilisation selon l'une quelconque des revendications précédentes, **caractérisée en ce que** l'on peut obtenir la matrice à base inorganique à partir de silanes, d'hydrolysats de silanes et de polysiloxanes et leurs mélanges.

8. Utilisation selon l'une quelconque des revendications précédentes, **caractérisée en ce que**
le revêtement faisant barrière à oxygène contient au moins 20 % en poids, en particulier au moins 30 % en poids, de préférence au moins 35 % en poids de particules métalliques, rapporté au revêtement faisant barrière à oxygène, et/ou
**en ce que** le revêtement faisant barrière à oxygène présente une proportion de particules métalliques dans la plage de 30 à 90 % en poids, en particulier de 35 à 80 % en poids, de préférence de 35 à 60 % en poids, par rapport au revêtement faisant barrière à oxygène.

9. Utilisation selon la revendication 8, **caractérisée en ce que** le revêtement faisant barrière à oxygène contient des particules métalliques à base de métaux choisis dans le groupe consistant en l'aluminium, le bismuth, le tungstène, le nickel, le chrome, le vanadium et/ou l'acier inoxydable et leurs mélanges et alliages, de préférence des particules d'aluminium.

10. Utilisation selon la revendication 8 ou 9, **caractérisée en ce que** le revêtement faisant barrière à oxygène contient des particules métalliques en forme de plaquettes et/ou granulaires, en particulier des particules métalliques sphériques, de préférence des particules métalliques en forme de plaquettes.

11. Utilisation selon l'une quelconque des revendications précédentes, **caractérisée en ce que** le revêtement faisant barrière à oxygène contient d'autres particules, en particulier des charges, en particulier dans des quantités allant de 0,5 à 10 % en poids, en particulier de 1 à 8 % en poids, de préférence de 2 à 5 % en poids, rapporté à la couche barrière à oxygène, en particulier dans laquelle les autres particules sont choisies parmi le carbure de tungstène, le nitrure de bore, les particules de verre, le phosphure de fer, le dioxyde de zirconium, l'acier inoxydable et leurs mélanges.
